Europäisches Patentamt

European Patent Office

Office européen des brevets

(11) Veröffentlichungsnummer: **0 020 798**
A1

# (12) EUROPÄISCHE PATENTANMELDUNG

(21) Anmeldenummer: 79101904.5

(22) Anmeldetag: 12.06.79

(51) Int. Cl.³: **F 24 J 3/02**

(43) Veröffentlichungstag der Anmeldung: 07.01.81
Patentblatt 81/1

(71) Anmelder: **Schäfer, Otto, Fliederstrasse 14,
D-6229 Walluf 1 (DE)**

(84) Benannte Vertragsstaaten: **AT BE CH DE FR GB IT LU
NL SE**

(72) Erfinder: **Schäfer, Otto, Fliederstrasse 14,
D-6229 Walluf 1 (DE)**

(54) Solar-Kollektor-Dachsteinziegel zur Nutzung der Umweltenergie im Niedertemperaturbereich.

(57) Durch die Verwendung der Solar-Kollektor-Dachsteinziegel als Absorber der Umweltenergie bei Tag und Nacht, kann mittels einer Wärmepumpe und der Heizungstechnik, der Energiebedarf an Heizöl und Erdgas für den Niedertemperaturbereich, erheblich verringert werden.

Im Solar-Kollektor-Dachsteinziegel ist ein Wärmetauscher einbetoniert. Der Energieträger im Wärmetauscher ist ein Wasser-Frostschutzgemisch, das eine Frostschutzgrenze bis –30 Grad Celsius haben sollte.

Um Kondenswasserbildung unterhalb der Solar-Kollektor-Dachsteinziegel zu vermeiden, ist darauf zu achten, daß der Taupunkt nicht überschritten wird und eine ausreichende Belüftung gewährleistet ist.

Das optische Bild der millionenfach vorhandenen Dachflächen wird durch die Nutzung der Umweltenergie mit Hilfe des Solar-Kollektor-Dachsteinziegels Typ 1 und Typ 2 in keiner Weise verändert. Diese beiden Typen eignen sich für nicht ausgebaute Dachgeschosse. Die Anschlußart links oder rechts ermöglicht eine Umgehung der Dachsparren und gewährleistet somit eine Vollbelegung der Dachflächen.

Bei ausgebautem Dachgeschoß entsteht, bei Verwendung der Solar-Kollektor-Dachsteinziegel Typ 3, durch die über die Ziegel und in horizontaler Richtung verlaufenden Verbindungsrohre eine geringfügige Veränderung der Dachflächenansicht.

Der Solar-Kollektor-Dachsteinziegel soll industriell hergestellt werden.

Solar-Kollektor-Dachsteinziegel zur Nutzung der
Umweltenergie im Niedertemperaturbereich.

Die Erfindung bezieht sich auf den Solar-Kollektor-
Dachsteinziegel zur Nutzung der Umweltenergie im
Niedertemperaturbereich.
Der im Solar-Kollektor-Dachsteinziegel eingebaute
Wärmetauscher ermöglicht durch die Verwendung von
Metall und Beton und als Wärmeträger ein Wasser-Frostschutzgemisch, eine optimale Absorbtion der Umweltenergie bei Tag und bei Nacht.
Über ein Rohrleitungssystem, der Heizungstechnik und
mittels einer Wärmepumpe, wird die von den Solar-
Kollektor-Dachsteinziegeln absorbierte Umweltenergie
auf ein zentrales Heizungssystem im Niedertemperaturbereich übertragen.

Der bisherige Stand der Technik von Dach-Solar-Kollektoren zur Nutzbarmachung der Umweltenergie, erstreckt
sich auf Hochtemperatur-Dachkollektoren und Niedertemperatur-Dachkollektoren. Der Hochtemperatur-Dachkollektor erbringt überwiegend seine Wärmeleistung bei
direkter Sonneneinstrahlung. Der Niedertemperatur-
Dachkollektor besteht aus Kunststoffrohren, die auf
der gesamten Dachfläche in Rohrregistern sichtbar
verlegt sind.
Alle mir bekannten Dachkollektoren sind mehr oder weniger
sichtbar auf den Dachflächen angeordnet und verändern
somit das äußere Bild des Daches.

Hier will meine Erfindung Abhilfe schaffen. Die Erfindung eines Solar-Kollektor-Dachsteinziegels, wie
sie in den beigefügten Zeichnungen dargestellt und in
den Patentansprüchen gekennzeichnet ist, löst die Aufgabe, die Umweltenergie zu jeder Zeit bei Temperaturen über dem Gefrierpunkt optimal zu nutzen. Auch wird bei der Verwendung der Solar-Kollektor-Dachsteinziegel des Typs 1 und des Typs 2, das Bild der ziegelgedeckten Dachflächen in keiner Weise verändert. Die Anschlußart der Wärmetauscher links oder rechts ermöglicht eine Umgehung der Dachsparren und gewährleisten somit eine Vollbelegung der Dachflächen. Die Verbindungen der Wärmetauscher erfolgen innerhalb des Dachraumes und in vertikaler Richtung und eignen sich besonders für Dachflächen mit nicht ausgebautem Dachgeschoß.
Nur bei Verwendung der Solar-Kollektor-Dachsteinziegel des Typs 3, ist durch die Verbindungen der Wärmetauscher miteinander, auf der Dachfläche und in horizontaler Richtung, eine Beeinträchtigung der Dachflächenansicht nicht zu vermeiden.

Durch den geringen Wasser-Rohrreibungswiderstand im Wärmetäscher, die günstige Gestaltung und Vielzahl der Absorberkreise ist es möglich, bei geringem Pumpendruck eine große Wassermenge pro Stunde der Wärmepumpe zuzuführen. Der Energieträger im Wärmetauscher der Solar-Kollektor-Dachsteiziegel ist ein Wasser-Frostschutzgemisch, das eine Frostschutzgrenze bis -30 Grad Celsius haben sollte. Um Kondenswasserbildung unterhalb der Solar-Kollektor-Dachsteinziegel zu vermeiden, ist darauf zu achten, daß der Taupunkt nicht überschritten wird und eine ausreichende Belüftung gewährleistet ist.

Die durch die Erfindung erreichten Vorteile sind im wesentlichen darin zu sehen, daß bei Verwendung der Solar-Kollektor-Dachsteinziegel des Typs 1 und des Typs 2 die ziegelgedeckten Dachflächen in keiner Weise verändert und beeinträchtigt werden, eine Vollbelegung der Dachflächen möglich ist, eine optimale Absorbtion der Umweltenergie gegeben ist und zur Dacheindeckung dient. Der Solar-Kollektor-Dachsteinziegel soll industriell hergestellt und weiterentwickelt werden.

- 1 -

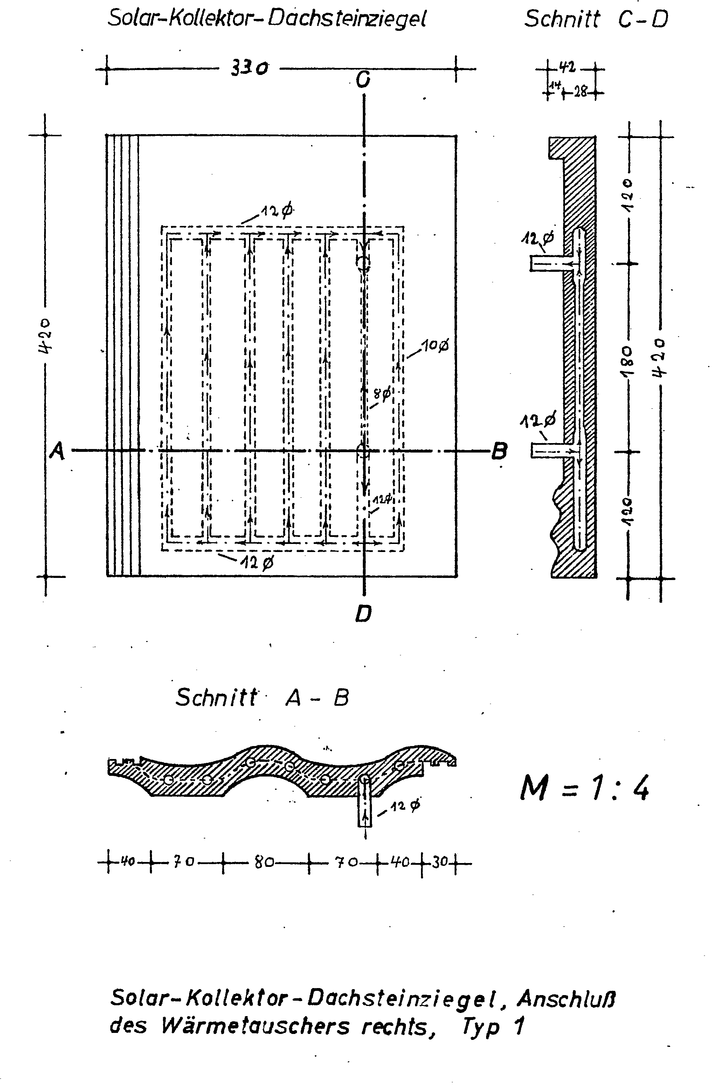

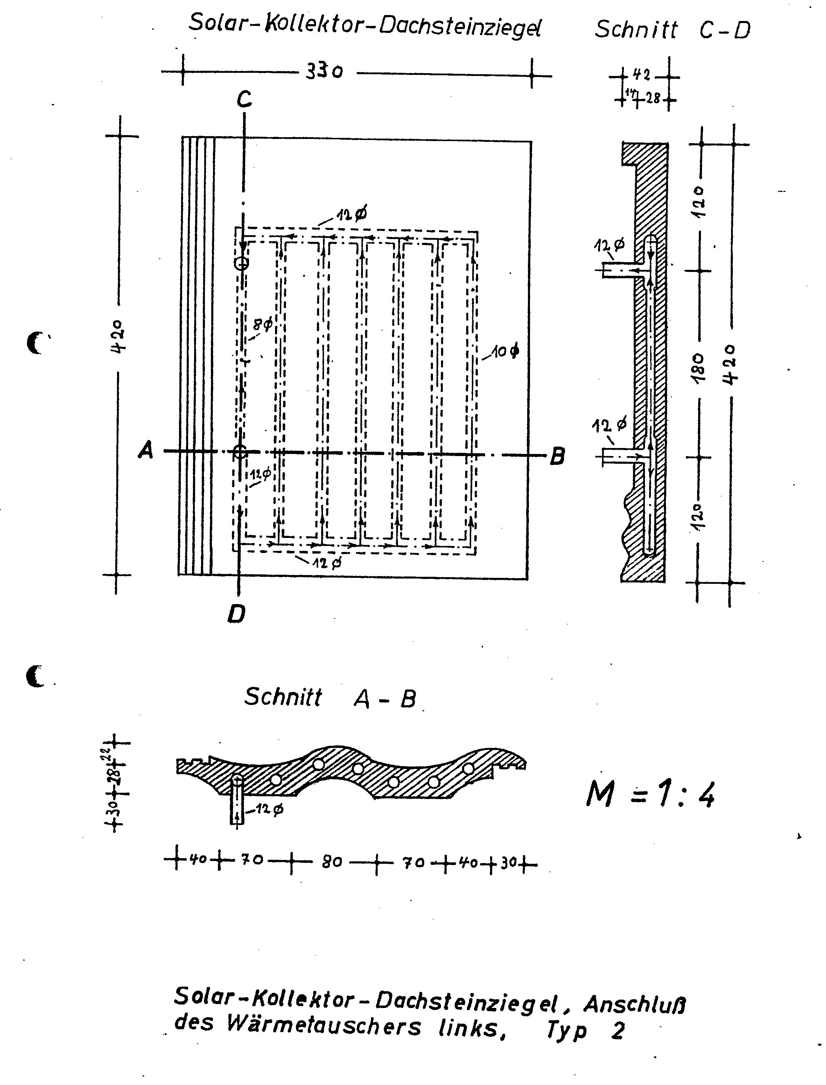

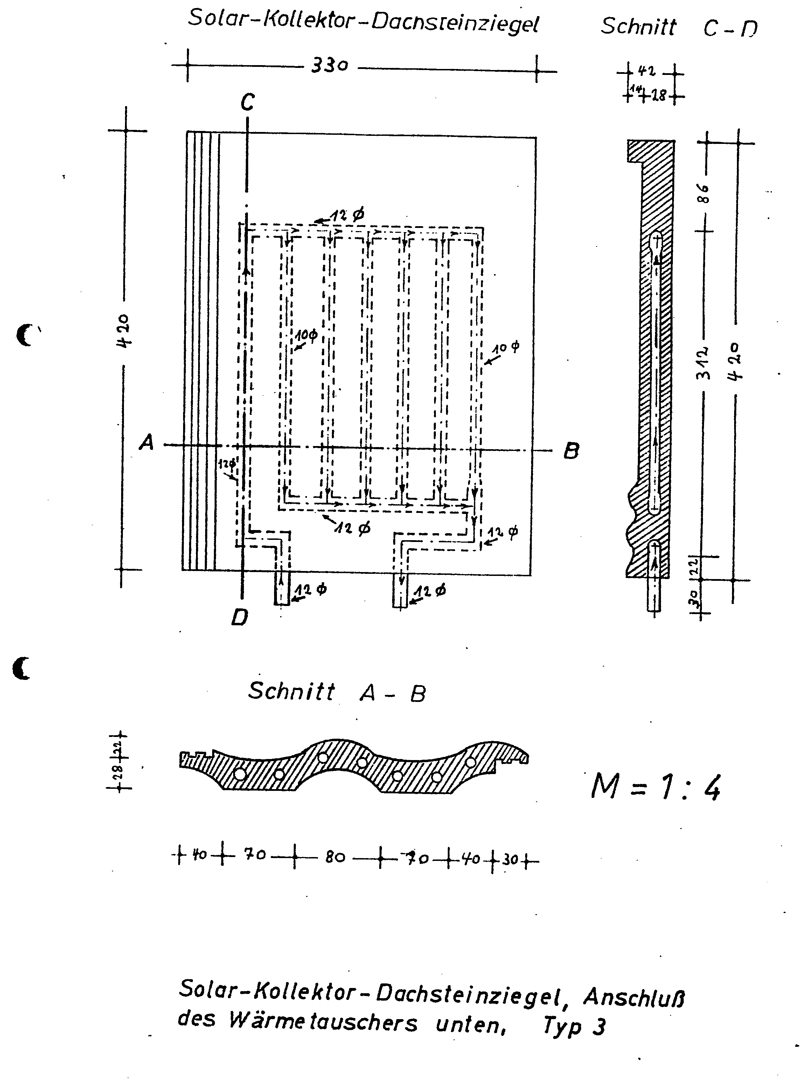

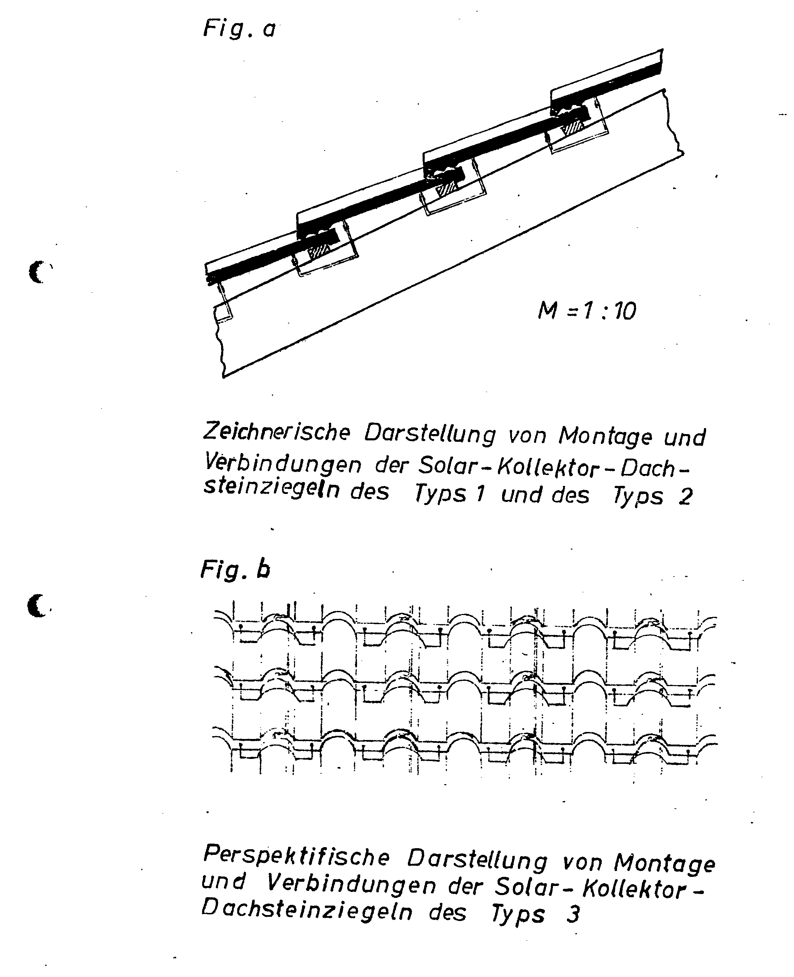

Patentansprüche:

1. Der Solar-Kollektor-Dachsteinziegel ist dadurch gekennzeichnet, daß ein Wärmetauscher im Beton-Dachsteinziegel einbetoniert ist, mit Hilfe der Heizungstechnik und einer Wärmepumpe die Umweltenergie absorbiert, als Dacheindeckung dient und die Dachansicht bei Verwendung der Solar-Kollektor-Dachsteinziegel des Typs 1 und des Typs 2 (Zeichnung Seite 2, Seite 3 und Seite 5, Fig.a ) nicht verändert.
Bei Verwendung der Solar-Kollektor-Dachsteinziegel des Typs 3 (Zeichnung Seite 4 und Seite 5, Fig.b ) ist durch die über den Solar-Kollektor-Dachstein-ziegeln, in horizontaler Richtung verlaufenden Verbindungsrohre, eine Beeinträchtigung der Dachflächenansicht nicht zu vermeiden.
Als Patent ist der Wärmetauscher in jeder gewählten Ausführung, Form, Materialzusammensetzung und dessen Einbau im Dachsteinziegel jeglicher Formgestaltung, Materialzusammensetzung und anderen Maßen zu schützen.

2. Der Solar-Kollektor-Dachsteinziegel Typ 1 (Zeichnung Seite 2 ), nach Patentanspruch 1, bei dem der Anschluß des Wärmetauschers rechts angebracht ist.

3. Der Solar-Kollektor-Dachsteinziegel Typ 2 (Zeichnung Seite 3 ), nach Patentanspruch 1, bei dem der Anschluß des Wärmetauschers links angebracht ist.

4. Der Solar-Kollektor-Dachsteinziegel Typ 3 (Zeichnung Seite 4 ), nach Patentanspruch 1, bei dem der Anschluß des Wärmetauschers unten angebracht ist.

1/4

Solar-Kollektor-Dachsteinziegel   Schnitt C-D

330

420

12 ⌀

10 ⌀

8 ⌀

12 ⌀

12 ⌀

A —— B

C

D

42

14 — 28

120

180

420

420

12 ⌀

12 ⌀

Schnitt A - B

12 ⌀

$M = 1 : 4$

40 — 70 — 80 — 70 — 40 — 30

Solar-Kollektor-Dachsteinziegel, Anschluß
des Wärmetauschers rechts, Typ 1

Solar-Kollektor-Dachsteinziegel

Schnitt C-D

330

420

12 ⌀

8 ⌀

10 ⌀

12 ⌀

12 ⌀

42

47 28

120

180

420

12 ⌀

12 ⌀

120

Schnitt A-B

22
30 28

12 ⌀

40 70 80 70 40 30

M = 1:4

Solar-Kollektor-Dachsteinziegel, Anschluß
des Wärmetauschers links, Typ 2

0020798

Solar-Kollektor-Dachsteinziegel

Schnitt C - D

330

420

C

12 ⌀

10 ⌀

10 ⌀

A ————————————————————— B

12 ⌀

12 ⌀

12 ⌀

D

12 ⌀ 12 ⌀

42

14 18

86

312

420

30 22

Schnitt A - B

28 12

40 | 70 | 80 | 70 | 40 | 30

M = 1 : 4

Solar-Kollektor-Dachsteinziegel, Anschluß
des Wärmetauschers unten, Typ 3

Fig. a

M = 1 : 10

Zeichnerische Darstellung von Montage und
Verbindungen der Solar-Kollektor-Dachsteinziegeln des Typs 1 und des Typs 2

Fig. b

Perspektifische Darstellung von Montage
und Verbindungen der Solar-Kollektor-
Dachsteinziegeln des Typs 3

**Europäisches Patentamt**

**EUROPÄISCHER RECHERCHENBERICHT**

0020798

Nummer der Anmeldung

EP 79 10 1904

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 383 403 (DE ROLLAND)<br>* Seiten 1,2; Figuren * | 1,4 |
| | -- | |
| X | FR - A - 2 399 631 (EURATOM)<br>* Ganzes Dokument * | 1,4 |
| | -- | |
| X | DE - A - 2 701 748 (KLUMPP)<br>* Seite 2 * | 1 |
| | -- | |
| X | DE - A - 2 729 313 (VOLGT)<br>* Ansprüche; Figuren * | 1 |
| | -- | |
| X | DE - A - 2 630 598 (PFOTSCH)<br>* Seiten 3,4; Zeilen 1,5; Ansprüche 1,4,11 * | 1-4 |
| | -- | |
| X | DE - A - 2 735 108 (ARTWEGER INDUSTRIE)<br>* Ansprüche 1,2,7,9,11-14; Figur 3 * | 1-4 |
| | -- | |
| X | DD - A - 125 357 (OLIN CORPORATION)<br>* Ansprüche 6,8,12,13,14,19; Figuren 5-13 * | 1-4 |
| | -- | |
| A | DE - A - 2 245 153 (BETEILIGUNGS-AG)<br>* Seite 4, Zeilen 11-27; Seite ./. | 1-4 |

**KLASSIFIKATION DER ANMELDUNG (Int.Cl. 3)**

F 24 J 3/02

**RECHERCHIERTE SACHGEBIETE (Int. Cl. 3)**

F 24 F 5/00
F 28 D 9/00
E 04 B 7/19

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-10-1979 | DOBNER |

EPA form 1503.1   06.78

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | 6, Zeilen 10-13, 18-21 * | | |
| | -- | | |
| A | DE - A - 2 607 740 (BATELLE MEMO-RIAL INSTITUTE)<br>* Ansprüche 1,2,4 * | 1-4 | |
| | -- | | |
| A | DE - A - 2 640 333 (SCHMELOW)<br>* Ansprüche 1-3; Seiten 5,7 * | 1 | |
| | ---- | | RECHERCHIERTE SACHGEBIETE (Int. Cl. 3) |

EPA Form 1503.2 06.78